# EUROPEAN PATENT SPECIFICATION

(11) **EP 4 283 119 B1**
(45) Date of publication and mention of the grant of the patent: **13.11.2024**
(21) Application number: 22175293.4
(22) Date of filing: 25.05.2022
(51) Int. Cl.: F17D 1/04, F03D 9/19

(54) **HYDROGEN MANIFOLD FOR WIND TURBINES**
WASSERSTOFFVERTEILER FÜR WINDTURBINEN
COLLECTEUR D'HYDROGÈNE POUR ÉOLIENNES

(43) Date of publication of application: 29.11.2023
(73) Proprietor: Siemens Gamesa Renewable Energy A/S, 7330 Brande (DK)
(72) Inventor: Soerensen, Johnny, 6920 Videbaek (DK)
(74) Representative: SGRE-Association

(56) References cited:
- EP-A1- 3 936 715
- FR-A1- 2 894 256
- US-A1- 2021 404 439

## Description

The present invention relates to a wind farm comprising a plurality of wind turbines. The present invention further relates to a plurality of wind farms.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. These locations can be remote onshore locations or offshore locations on the sea. For the transportation of the electrical energy, the power generated by the generator of the wind turbine travels to a transmission substation of the wind farm, where it is converted to high voltage, usually between 130-765kV, for long distance transmission on the transmission grid over power lines. The transmission grid connects the remote location of the wind farm to a transformer station of the electrical grid, which transforms the electricity to a voltage compatible with the electrical grid.

A problem of remote wind farms is that the distance between the wind farm and the transformer station of the electrical grid needs to be bridged. Long power lines with very high installation costs are required.

The current development of the technology of wind turbines tends to an increased size of wind turbines for harvesting more wind energy, with longer blades and higher towers. Due to the increasing size of wind turbines, more power is supplied to the grid which is to be transported from the wind farm to the nearest input point of the grid. Increasing the power transferred over the long-distance power lines results in higher requirements for the cables and higher costs.

To reduce the amount of energy transferred by the power lines of the transmission grid or to avoid the use of long-distance power lines completely, an electrolytic unit can be installed in the vicinity of the wind turbine. A wind turbine comprising an electrolytic unit generates electrical power by means of the generator and hydrogen by means of the electrolytic unit driven by at least a part of the power of the wind turbine.

Electrolytic units are power-to-gas units configured to produce hydrogen. Hence, the energy produced by the wind turbine may be used in an electrolysis process to generate hydrogen and oxygen. These gases can be used afterwards for the generation of electrical energy in fuel cells or to produce chemicals, such as ammonia or methane. The produced gases from the electrolytic unit can be transported by using a pipeline or by pressurizing the gas into a container, which is less expensive than transporting electricity directly over long-distance power lines. The transport of hydrogen, in particular in a pipeline system, is less expensive than transporting electricity directly to shore.

Hence, there is a need to provide a safe transportation system for hydrogen produced by wind turbines to a desired destination.

The use of electrolytic units in combination with wind turbines is known from the prior art, for example in the document US 5,592,028 A, where a plurality of electrolysis cells are connected to a wind farm and produce hydrogen by means of the electricity produced by the generators of the wind turbines. Similarly, the document WO 2020/095012 A1 describes an offshore wind turbine system for the large-scale production of hydrogen, which includes a floating tower structure with a desalination unit and an electrolysis unit.

In offshore, a plurality of wind turbines comprising each an electrolytic unit is arranged in a wind farm. The electrolytic units of the wind turbines are connected in parallel to the hydrogen pipeline for exporting the produced hydrogen to the desired location, usually an onshore location. This connection of the pipeline with the output of the electrolytic units is done subsea.

This type of connection below sea level makes maintenance and repairment tasks difficult, as the hydrogen collector is not easily accessible. In addition, the saltwater and marine growth results in a fast deterioration of the coupling.

Regarding further prior art, reference is made to US 2021/404439 A1, FR 2894256 A1 and EP 3936715 A1.

It is an object of the invention to provide a wind farm with an improved connection of the hydrogen output of the electrolytic units of the wind turbines with the hydrogen pipeline.

This is achieved by a wind farm according to claim 1 and a plurality of wind farms according to claim 14.

According to the invention, a wind farm comprises a plurality of wind turbines. Each wind turbine comprises a generator, a nacelle, and a tower supporting the nacelle.

The tower has a first end mounted to a base of the wind turbine and a second end supporting the nacelle

According to the invention, each of at least two of the wind turbines further comprises an electrolytic unit electrically coupled to the generator of said wind turbine for producing hydrogen and a hydrogen output for transporting the produced hydrogen out of the wind turbine.

Hydrogen is produced from an input fluid, in particular water, by means of the energy produced by the generator of the wind turbine.

Hence, the generator generates electric power and supplies the electrolytic unit with at least a part of the power generated, as both components are electrically coupled.

Due to the fluctuation of the power generation, depending for example on weather conditions and wind levels, it is difficult to foresee the power output of a wind turbine to the electricity grid or to an energy storage device. By using a part of the energy produced by the generator to produce hydrogen, the fluctuations can be mitigated. The hydrogen can be taken out of the wind turbine by a system outlet or a hydrogen output coupled to an output of the electrolytic unit.

Hence, at least a part of the energy produced by the generator can be used to power an electrolytic unit, so that the electricity grid is not overloaded by peaks of power generation of the fluctuating power generation facility. Additionally, if a problem in the output to the electricity grid occurs, the power can be redirected completely to the electrolytic unit so that only hydrogen, is produced. The hydrogen produced is usually in a gaseous state, which can be compressed and/or mixed with other components to a liquid state which is easier to store and/or transport.

The electrolytic unit can also be a mixed gas generator which performs electrolysis and generates other gases. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the hydrogen and gives it a flame speed up to eight times higher than compressed natural gas.

The electrolytic unit can be housed in a housing, such as a container. The housing of the electrolytic unit can be a container. Due to the harsh environmental conditions of wind turbine locations, the components of the electrolytic unit are exposed to rain and dirt, as well as to salt for offshore wind turbines installed at the sea. This results in a fast corrosion of the metals of the components. In order to prevent corrosion, components of the wind turbine installed comprising metallic parts exposed to the atmosphere, such as an electrolytic unit installed on the platform of the wind turbine, are usually housed in containers.

According to the invention, each hydrogen output is connected to a manifold by means of a manifold input, wherein the manifold is arranged above sea level and comprises a first manifold output configured to be connected to a first hydrogen pipeline for transporting the hydrogen produced by the wind farm out of the wind farm.

By having a manifold arranged above the sea level, the coupling of the hydrogen output of each wind turbine is protected against the harsh corroding environment of saltwater. This measure greatly increases the lifetime of the hydrogen couplings and makes repairment or maintenance works easier for workers, as the manifold is easily accessible.

The connection of the manifold with the hydrogen output of each wind turbine can be achieved by individual gas pipelines between the gas producing wind turbines and the manifold.

The manifold is coupled to a first hydrogen pipeline by means of a first manifold output.

According to a preferred embodiment of the invention, the manifold is arranged at one of the wind turbines.

The manifold can be arranged at a gas producing wind turbine. Alternatively, the manifold can be arranged at a wind turbine which does not produce gas, i.e. which has no electrolytic unit.

According to another preferred embodiment of the invention, the manifold is arranged at a platform of the wind turbine.

A platform eases maintenance and repairment works as the technicians can walk on the platform for the tasks. The platform is installed at the tower above sea level, which protects the components arranged on the platform against corrosion due to saltwater. The manifold is thus easily accessible and protected against corrosion.

The platform can support at least a part of the electrolytic unit above the water level. With the dedicated platform, the electrolytic unit can be more easily mounted than for example by installing the electrolytic unit on the nacelle and at least a part of the electrolytic unit can be kept above the water level.

According to another preferred embodiment of the invention, the manifold is arranged inside the tower of the wind turbine.

Arranging the manifold inside the tower protects the connections of the manifold against the harsh environmental conditions of offshore locations and against wind, which carries salt of the saltwater.

According to another preferred embodiment of the invention, the manifold is arranged at the nacelle of the wind turbine.

The manifold can be placed inside the nacelle, which protects the connections of the manifold against the harsh environmental conditions of offshore locations and against wind, which carries salt of the saltwater.

According to another preferred embodiment of the invention, the manifold is arranged at a foundation of the wind turbine.

According to another preferred embodiment of the invention, the manifold is housed in a housing such as a container. Due to the harsh environmental conditions of wind turbine locations, the inlets and outlets of the manifold are exposed to rain and dirt, as well as to salt for offshore wind turbines installed at the sea. This results in a fast corrosion of the metals of the components. In order to prevent corrosion, the manifold can be housed in a container.

According to another preferred embodiment of the invention, the manifold comprises a valve comprises a valve at least at one of the manifold inputs.

A valve can open and close the flow of hydrogen between the hydrogen output of the wind turbine and the manifold. The flow can be stopped for example during maintenance or repairment tasks or if there is an obstruction or any other problem in the pipeline.

It is particularly advantageous to have a valve at each one of the manifold inputs of the manifold to better control the flow of hydrogen through the manifold.

According to another preferred embodiment of the invention, the manifold comprises a valve at the first manifold output.

The valve can the block the flow between the manifold and the hydrogen pipeline, for example during maintenance or repairment tasks or if there is an obstruction or any other problem in the pipeline.

According to another preferred embodiment of the invention, the valve is a check valve.

A check valve is a non-return valve which closes automatically in the absence of a flow in the flow direction, which prevents the hydrogen from returning to the wind turbine once it has passed the check valve. This is advantageous to avoid a pressure build up, which can result in an explosion.

According to another preferred embodiment of the invention, the wind farm further comprises a control system for monitoring the hydrogen flow.

The control system can monitor the hydrogen flow to check for example if there is a leakage and the electrolytic unit should be shut down to avoid any explosions which could damage the wind turbine components and workers. The control system can monitor the flow and the pressure of the hydrogen at the manifold or inside the pipelines.

According to another preferred embodiment of the invention, the manifold comprises a second manifold output configured to be connected to a second hydrogen pipeline for transporting the hydrogen produced by the wind farm out of the wind farm.

Having two hydrogen pipelines ensures that, in case of failure due to for example an obstruction of the pipeline, hydrogen can still be exported through the second pipeline. This avoids that hydrogen builds up in the pipelines and a pressure increase, which can result in an explosion.

According to the invention, the plurality of wind turbines is arranged in at least two wind turbine arrays comprising at least one manifold per wind turbine array, wherein the manifold of each wind turbine array is coupled to the manifold of at least another wind turbine array by means of a hydrogen connection.

The interconnection of the manifold of wind turbine arrays has the advantage that the flow of hydrogen can be diverted to another manifold if one pipeline of a specific wind turbine array fails due to for example an obstruction. Hence, the hydrogen can still be exported out of the wind farm through another wind turbine array by diverting the flow through the operational wind turbine arrays and then exporting the hydrogen out of the wind farm.

According to another preferred embodiment of the invention, the manifold of each wind turbine array is directly connected to the first hydrogen pipeline and/or to any further hydrogen pipeline for transporting the hydrogen produced by the wind farm out of the wind farm.

This is particularly advantageous for an efficient extraction of hydrogen out of each manifold in case of obstructions or due to maintenance reasons and it further mitigates the risk of an explosion due to accumulated hydrogen.

Yet another aspect of the invention relates to a plurality of wind farms, wherein the manifold of each wind farm is coupled to the manifold of at least another wind farm by means of a hydrogen connection.

In order to facilitate the understanding of the characteristics of the invention and being an integral part of this specification, some drawing sheets are attached on which figures, with an illustrative but not limiting character, the following is represented:
Figure 1 shows a wind farm comprising a plurality of wind turbines connected to a manifold according to a first embodiment of the invention.
Figure 2 shows another wind farm comprising a plurality of wind turbines connected to a manifold according to a second embodiment of the invention.
Figure 3 shows another wind farm comprising a plurality of wind turbines connected to a manifold according to another embodiment of the invention.
Figure 4 shows the manifold arranged at the platform of a wind turbine
Figure 5 shows a plurality of inter-connected wind turbine arrays according to an embodiment of the invention.
Figure 6 shows a plurality of inter-connected wind turbine arrays according to another embodiment of the invention.
Figure 7 shows a plurality of inter-connected wind turbine arrays according to another embodiment of the invention.

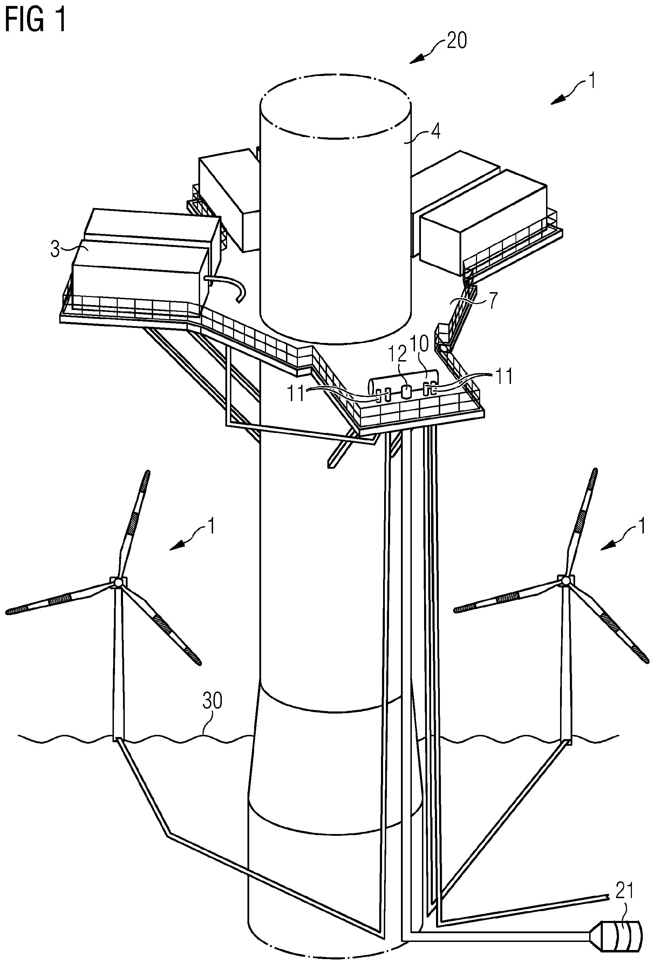

Figure 1 shows a wind farm 20 comprising a plurality of wind turbines 1. The wind turbines comprise each a generator 2, a nacelle 6, and a tower 4 supporting the nacelle 6, as well as an electrolytic unit 3 electrically coupled to the generator 2 for producing hydrogen and a hydrogen output 8 for transporting the produced hydrogen out of the wind turbine.

Each hydrogen output 8 is connected to a manifold 10 by means of a manifold input 11, wherein the manifold 10 is arranged above sea level 30 and comprises a first manifold output 12 configured to be connected to a first hydrogen pipeline 21 for transporting the hydrogen produced by the wind farm 20 out of the wind farm 20.

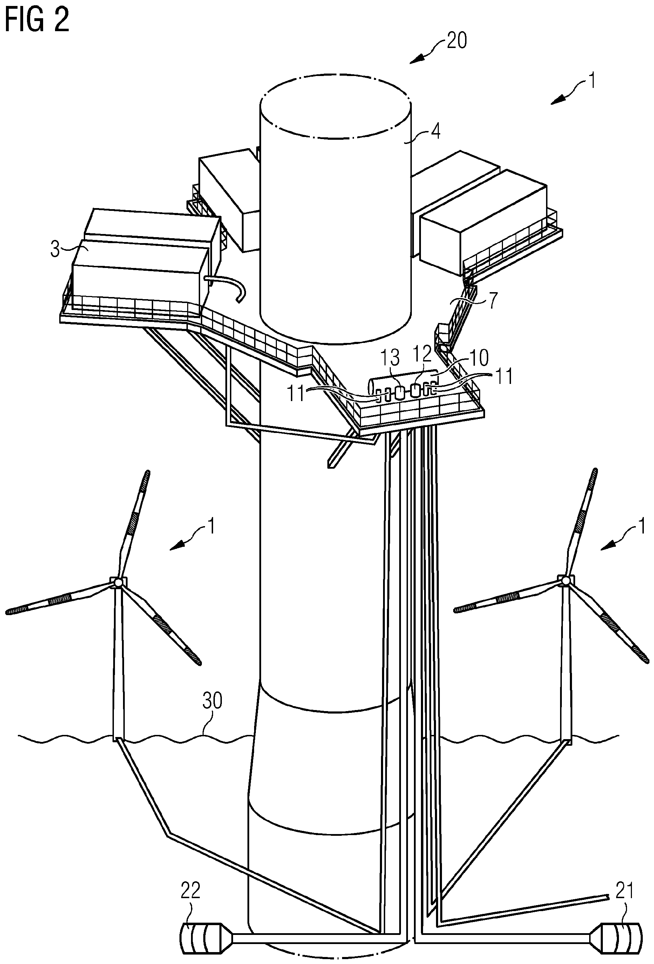

Figure 2 shows another wind farm 20 comprising a plurality of wind turbines 1 connected to a manifold 10 according to a second embodiment of the invention. In addition to the features of the first embodiment of the invention, the second embodiment shown in this figure comprises a second manifold output 13 configured to be connected to a second hydrogen pipeline 22 for transporting the hydrogen produced by the wind farm 20 out of the wind farm 20.

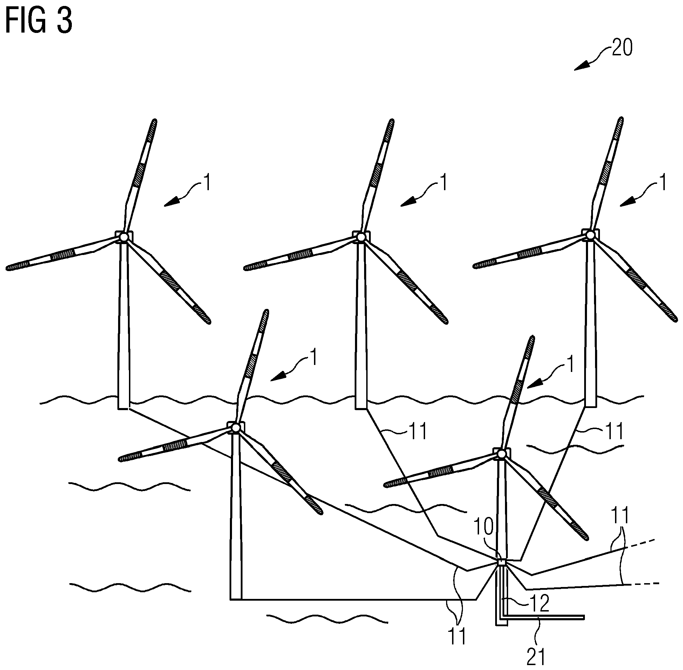

Figure 3 shows another wind farm 20 comprising a plurality of wind turbines 1 connected to a manifold 11 according to another embodiment of the invention. This manifold 11 comprises a first manifold output 12 configured to be connected to a first hydrogen pipeline 21.

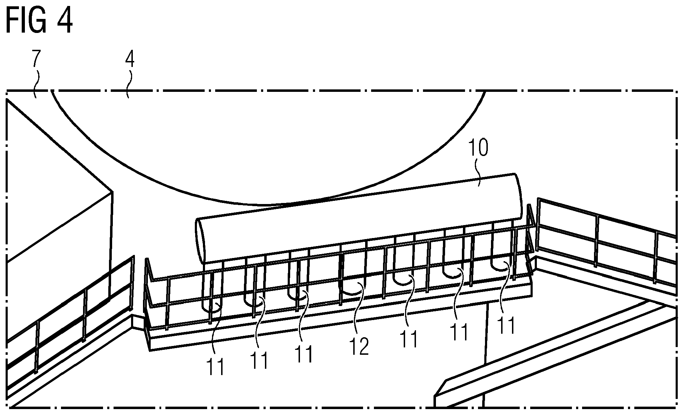

Figure 4 shows the manifold 10 arranged at the platform 7 of a wind turbine 1 comprising a plurality of manifold inputs 11 and a first manifold output 12.

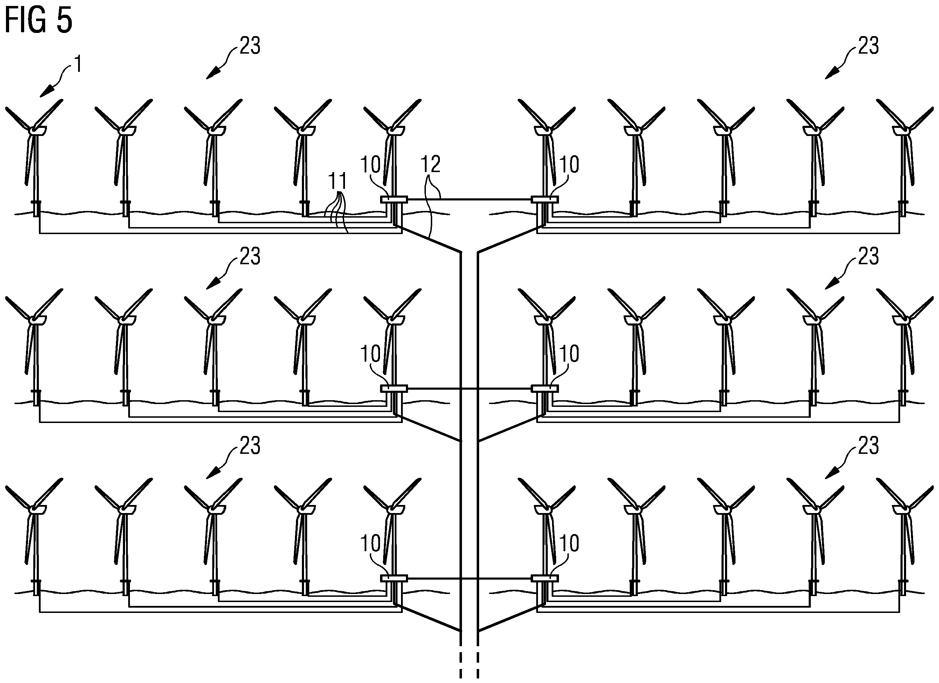

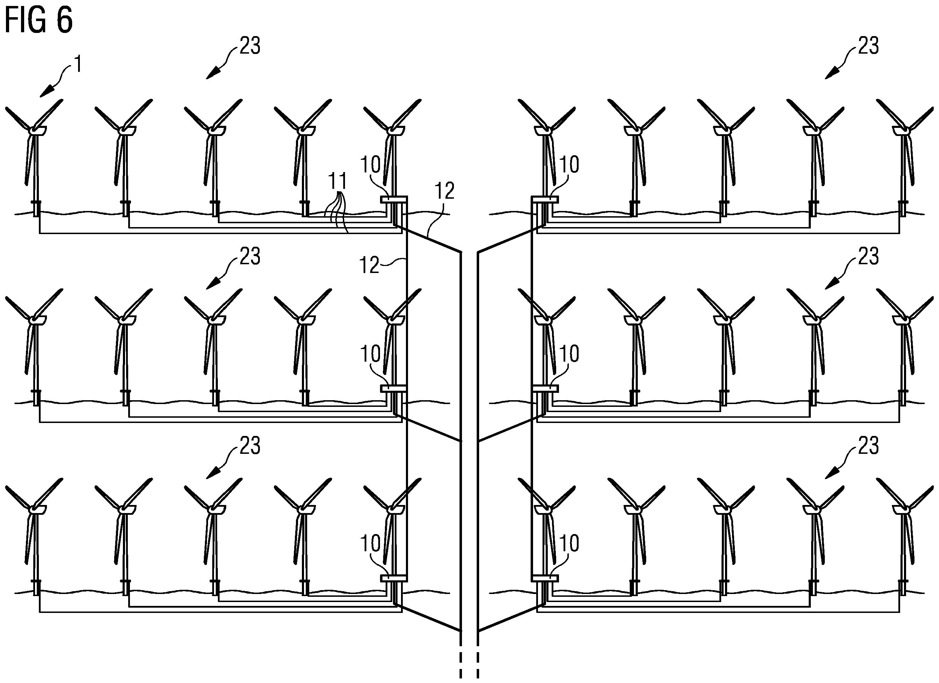

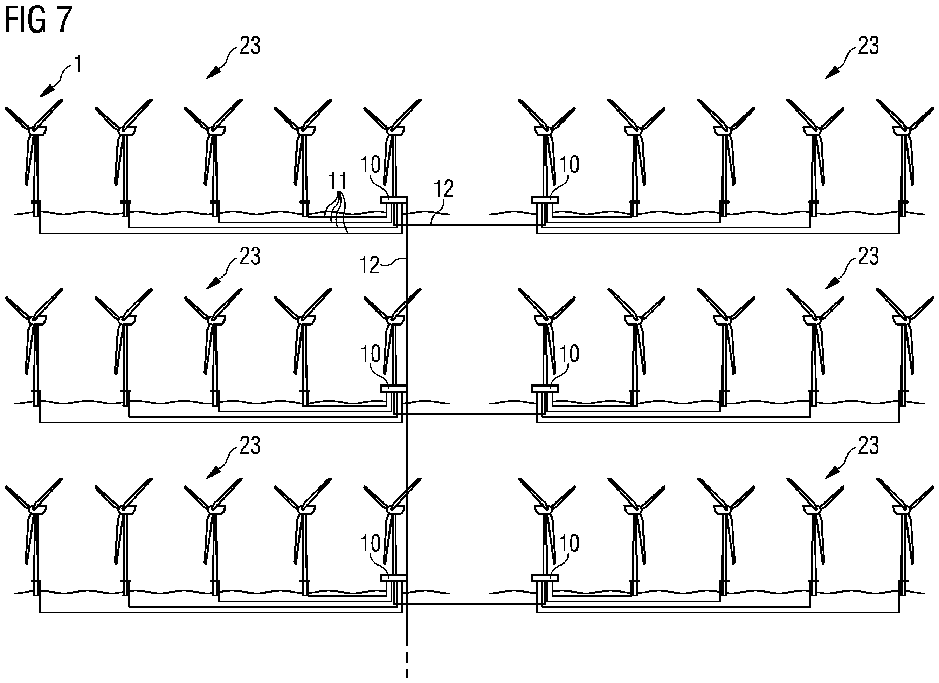

Figures 5 to 7 show a plurality of inter-connected wind turbine arrays 23 in different configurations. The first and second manifold outputs 12, 13 of each wind turbine array 23 are connected to either a neighbouring wind turbine array 23 or to a first or second hydrogen pipeline 21, 22.

A similar connection as the one shown in Figures 5 to 7 can be done with a plurality of wind farms 20 by having the manifold 10 of each wind farm 20 coupled to the manifold 10 of at least another wind farm 20 by means of a hydrogen connection.

### Reference numbers

- 1: Wind turbine
- 2: Generator
- 3: Electrolytic unit
- 4: Tower
- 6: Nacelle
- 7: Platform
- 8: Hydrogen output

- 10: Manifold
- 11: Manifold input
- 12: First manifold output
- 13: Second manifold output

- 20: Wind farm
- 21: First hydrogen pipeline
- 22: Second hydrogen pipeline
- 23: Wind turbine array

- 30: Sea level

## Claims

1. A wind farm (20) comprising a plurality of wind turbines (1), each wind turbine (1) comprising a generator (2), a nacelle (6), and a tower (4) supporting the nacelle (6), wherein each of at least two of the wind turbines (1) further comprises an electrolytic unit (3) electrically coupled to the generator (2) of said wind turbine (1) for producing hydrogen and a hydrogen output (8) for transporting the produced hydrogen out of the wind turbine (1),
wherein each hydrogen output (8) is connected to a manifold (10) by means of a manifold input (11), wherein the manifold (10) is arranged above sea level (30) and comprises a first manifold output (12) configured to be connected to a first hydrogen pipeline (21) for transporting the hydrogen produced by the wind farm (20) out of the wind farm (20),
wherein the plurality of wind turbines (1) is arranged in at least two wind turbine arrays (23) comprising at least one manifold (10) per wind turbine array (23),
wherein the manifold (10) of each wind turbine array (23) is coupled to the manifold (10) of at least another wind turbine array (23) by means of a hydrogen connection.

2. The wind farm (20) according to claim 1, wherein the manifold (10) is arranged at one of the wind turbines (1).

3. The wind farm (20) according to claim 2, wherein the manifold (10) is arranged at a platform (7) of the wind turbine (1).

4. The wind farm (20) according to claim 2, wherein the manifold (10) is arranged inside the tower (4) of the wind turbine (1).

5. The wind farm (20) according to claim 2, wherein the manifold (10) is arranged at the nacelle (6) of the wind turbine (1).

6. The wind farm (20) according to claim 2, wherein the manifold (10) is arranged at a foundation of the wind turbine (1) .

7. The wind farm (20) according to any of the preceding claims, wherein the manifold (10) is housed in a housing such as a container.

8. The wind farm (20) according to any of the preceding claims, wherein the manifold (10) comprises a valve at least at one of the manifold inputs (11).

9. The wind farm (20) according to any of the preceding claims, wherein the manifold (10) comprises a valve at the first manifold output (12).

10. The wind farm (20) according to claim 8 or 9, wherein the valve is a check valve.

11. The wind farm (20) according to any of the preceding claims, wherein said wind farm (20) further comprises a control system for monitoring the hydrogen flow.

12. The wind farm (20) according to any of the preceding claims, wherein the manifold (10) comprises a second manifold output (13) configured to be connected to a second hydrogen pipeline (22) for transporting the hydrogen produced by the wind farm (20) out of the wind farm (20).

13. The wind farm (20) according to any of the preceding claims, wherein the manifold (10) of each wind turbine array (23) is directly connected to the first hydrogen pipeline (21) and/or to any further hydrogen pipeline for transporting the hydrogen produced by the wind farm (20) out of the wind farm (20).

14. A plurality of wind farms (20) according to any of the preceding claims, wherein the manifold (10) of each wind farm (20) is coupled to the manifold (10) of at least another wind farm (20) by means of a hydrogen connection.

## Patentansprüche

1. Windpark (20) mit einer Mehrzahl von Windturbinen (1), wobei jede Windturbine (1) einen Generator (2), eine Gondel (6) und einen Turm (4), der die Gondel (6) trägt, aufweist,
wobei jede von mindestens zwei der Windturbinen (1) ferner eine Elektrolyseeinheit (3), die elektrisch mit dem Generator (2) der Windturbine (1) verbunden ist, um Wasserstoff zu erzeugen, und einen Wasserstoffausgang (8) zum Abtransport des erzeugten Wasserstoffs aus der Windturbine (1) aufweist,
wobei jeder Wasserstoffausgang (8) über einen Verteilereingang (11) mit einem Verteiler (10) verbunden ist, wobei der Verteiler (10) über dem Meeresspiegel (30) angeordnet ist und einen ersten Verteilerausgang (12) aufweist, der zum Anschluss an eine erste Wasserstoffpipeline (21) zum Abtransport des von dem Windpark (20) erzeugten Wasserstoffs aus dem Windpark (20) gestaltet ist, wobei die Mehrzahl von Windturbinen (1) in mindestens zwei Windturbinengruppen (23) angeordnet sind, die mindestens einen Verteiler (10) pro Windturbinengruppe (23) aufweisen,
wobei der Verteiler (10) jeder Windturbinengruppe (23) mittels einer Wasserstoffverbindung mit dem Verteiler (10) mindestens einer anderen Windturbinengruppe (23) verbunden ist.

2. Windpark (20) nach Anspruch 1, wobei der Verteiler (10) an einer der Windturbinen (1) angeordnet ist.

3. Windpark (20) nach Anspruch 2, wobei der Verteiler (10) an einer Plattform (7) der Windturbine (1) angeordnet ist.

4. Windpark (20) nach Anspruch 2, wobei der Verteiler (10) innerhalb des Turms (4) der Windturbine (1) angeordnet ist.

5. Windpark (20) nach Anspruch 2, wobei der Verteiler (10) an der Gondel (6) der Windturbine (1) angeordnet ist.

6. Windpark (20) nach Anspruch 2, wobei der Verteiler (10) an einem Fundament der Windturbine (1) angeordnet ist.

7. Windpark (20) nach einem der vorhergehenden Ansprüche, wobei der Verteiler (10) in einem Gehäuse, beispielsweise einem Container, untergebracht ist.

8. Windpark (20) nach einem der vorhergehenden Ansprüche, wobei der Verteiler (10) an mindestens einem der Verteilereingänge (11) ein Ventil aufweist.

9. Windpark (20) nach einem der vorhergehenden Ansprüche, wobei der Verteiler (10) ein Ventil am ersten Verteilerausgang (12) aufweist.

10. Windpark (20) nach Anspruch 8 oder 9, wobei das Ventil ein Rückschlagventil ist.

11. Windpark (20) nach einem der vorhergehenden Ansprüche, wobei der Windpark (20) ferner ein Steuersystem zum Überwachen des Wasserstoffflusses aufweist.

12. Windpark (20) nach einem der vorhergehenden Ansprüche, wobei der Verteiler (10) einen zweiten Verteilerausgang (13) aufweist, der zum Anschluss an eine zweite Wasserstoffpipeline (22) zum Abtransport des vom Windpark (20) erzeugten Wasserstoffs aus dem Windpark (20) gestaltet ist.

13. Windpark (20) nach einem der vorhergehenden Ansprüche, wobei der Verteiler (10) jeder Windturbinengruppe (23) direkt mit der ersten Wasserstoffpipeline (21) und/oder mit jeder weiteren Wasserstoffpipeline zum Abtransport des vom Windpark (20) erzeugten Wasserstoffs aus dem Windpark (20) verbunden ist.

14. Mehrzahl von Windparks (20) nach einem der vorhergehenden Ansprüche, wobei der Verteiler (10) jedes Windparks (20) mittels einer Wasserstoffverbindung mit dem Verteiler (10) mindestens eines anderen Windparks (20) verbunden ist.

## Revendications

1. Parc éolien (20) comprenant une pluralité d'éoliennes (1), chaque éolienne (1) comprenant un générateur (2), une nacelle (6), et une tour (4) supportant la nacelle (6),
dans lequel chacune d'au moins deux des éoliennes (1) comprend en outre une unité électrolytique (3) électriquement couplée au générateur (2) de ladite éolienne (1) pour produire de l'hydrogène et une sortie d'hydrogène (8) pour transporter l'hydrogène produit hors de l'éolienne (1),
dans lequel chaque sortie d'hydrogène (8) est reliée à un collecteur (10) au moyen d'une entrée de collecteur (11), dans lequel le collecteur (10) est agencé au-dessus du niveau de la mer (30) et comprend une première sortie de collecteur (12) configurée pour être reliée à un premier hydrogénoduc (21) pour transporter l'hydrogène produit par le parc éolien (20) hors du parc éolien (20),
dans lequel la pluralité d'éoliennes (1) est agencée en au moins deux réseaux d'éoliennes (23) comprenant au moins un collecteur (10) par réseau d'éoliennes (23),
dans lequel le collecteur (10) de chaque réseau d'éoliennes (23) est couplé au collecteur (10) d'au moins un autre réseau d'éoliennes (23) au moyen d'une liaison hydrogène.

2. Parc éolien (20) selon la revendication 1, dans lequel le collecteur (10) est agencé au niveau de l'une des éoliennes (1) .

3. Parc éolien (20) selon la revendication 2, dans lequel le collecteur (10) est agencé au niveau d'une plateforme (7) de l'éolienne (1).

4. Parc éolien (20) selon la revendication 2, dans lequel le collecteur (10) est agencé à l'intérieur de la tour (4) de l'éolienne (1).

5. Parc éolien (20) selon la revendication 2, dans lequel le collecteur (10) est agencé au niveau de la nacelle (6) de l'éolienne (1).

6. Parc éolien (20) selon la revendication 2, dans lequel le collecteur (10) est agencé au niveau d'une fondation de l'éolienne (1).

7. Parc éolien (20) selon l'une des revendications précédentes, dans lequel le collecteur (10) est reçu dans un logement tel qu'un conteneur.

8. Parc éolien (20) selon l'une des revendications précédentes, dans lequel le collecteur (10) comprend une vanne au moins au niveau de l'une des entrées de collecteur (11).

9. Parc éolien (20) selon l'une des revendications précédentes, dans lequel le collecteur (10) comprend une vanne au niveau de la première sortie de collecteur (12).

10. Parc éolien (20) selon la revendication 8 ou 9, dans lequel la vanne est une vanne de non-retour.

11. Parc éolien (20) selon l'une des revendications précédentes, dans lequel ledit parc éolien (20) comprend en outre un système de commande pour surveiller l'écoulement d'hydrogène.

12. Parc éolien (20) selon l'une des revendications précédentes, dans lequel le collecteur (10) comprend une deuxième sortie de collecteur (13) configurée pour être reliée à un deuxième hydrogénoduc (22) pour transporter l'hydrogène produit par le parc éolien (20) hors du parc éolien (20).

13. Parc éolien (20) selon l'une des revendications précédentes, dans lequel le collecteur (10) de chaque réseau d'éoliennes (23) est directement relié au premier hydrogénoduc (21) et/ou à tout autre hydrogénoduc pour transporter l'hydrogène produit par le parc éolien (20) hors du parc éolien (20) .

14. Pluralité de parcs éoliens (20) selon l'une des revendications précédentes, dans laquelle le collecteur (10) de chaque parc éolien (20) est couplé au collecteur (10) d'au moins un autre parc éolien (20) au moyen d'une liaison hydrogène.
